Europäisches Patentamt

**European Patent Office**

**Office européen des brevets**

(11) Publication number: **0 119 028**
**A2**

## (12) EUROPEAN PATENT APPLICATION

(21) Application number: **84301221.2**

(22) Date of filing: **24.02.84**

(51) Int. Cl.³: **C 04 B 35/10**
**C 04 B 35/48**

(30) Priority: **25.02.83 JP 30473/83**
**07.11.83 JP 208786/83**

(43) Date of publication of application:
**19.09.84 Bulletin 84/38**

(84) Designated Contracting States:
**DE GB SE**

(71) Applicant: **Hitachi Metals, Ltd.**
**1-2, Marunouchi, 2-chome Chiyoda-ku**
**Tokyo 100(JP)**

(72) Inventor: **Kojo, Katsuhiko**
**1040, Oaza Uenodai**
**Fukaya-shi(JP)**

(72) Inventor: **Fukushima, Hideko**
**856-1, Oaza Niibori**
**Kumagaya-shi(JP)**

(74) Representative: **Goldin, Douglas Michael et al,**
**J.A. KEMP & CO. 14, South Square Gray's Inn**
**London WC1R 5EU(GB)**

(54) A sintered aluminous material having high hardness and toughness.

(57) A sintered aluminous material having high hardness and toughness is composed principally of $Al_2O_3$ and conatining $ZrO_2$ in an amount of not more than 60% and $Y_2O_3$ in amount of 0.5 - 4.5% by mole based on $ZrO_2$, the crystal structure of the material being predominantly tetragonal. It is made by adding $Y_2O_3$ to a base material comprising $Al_2O_3$ and $ZrO_2$, which is sintered under strictly controlled sintering conditions, so that the crystal form of $ZrO_2$ dispersed in $Al_2O_3$ becomes predominantly tetragonal. High hardness and toughness result from the stress-inducing transformation of the crystal structure from tetragonal form to monoclinic form.

- 1 -

A SINTERED ALUMINOUS MATERIAL HAVING

HIGH HARDNESS AND TOUGHNESS

BACKGROUND OF THE INVENTION

FIELD OF THE INVENTION

This invention relates to an improvement on sintered aluminous materials used for structural members which are required to have high hardness and toughness, or as electronic base materials which are required to have a good workability.

DESCRIPTION OF THE PRIOR ART

The sintered aluminous materials are used for machine tools, structural members such as valves, or as a base material for various types of thin film electronic devices. However, conventional sintered aluminous materials had the problems in their strength quality such as chipping resistance and crack resistance in their use for the structural members. They also has the problem of chipping loss in the course of working such as cutting, grinding or polishing in their use as a base material for various types of thin film devices. It is known that these problems are mostly attributable to the lack of toughness of the sintered aluminous materials, and the improvement on this respect has been desired.

As a solution to such problem, it has been proposed to add $ZrO_2$ to the sintering materials composed principally of $Al_2O_3$, thereby permitting the sintered body to have the microcracks produced by a volume expansion during the phase transformation of $ZrO_2$, that is, the change of its crystal structure from tetragonal (t-phase) to monoclinic phase (m-phase), which takes place in the course of cooling of the sintered body, thereby to improve the toughness of the sintered aluminous material (see, for example, DT-OS No. 2,549,652 and Journal of the American Ceramic Society, 59, 1-2, p.49).

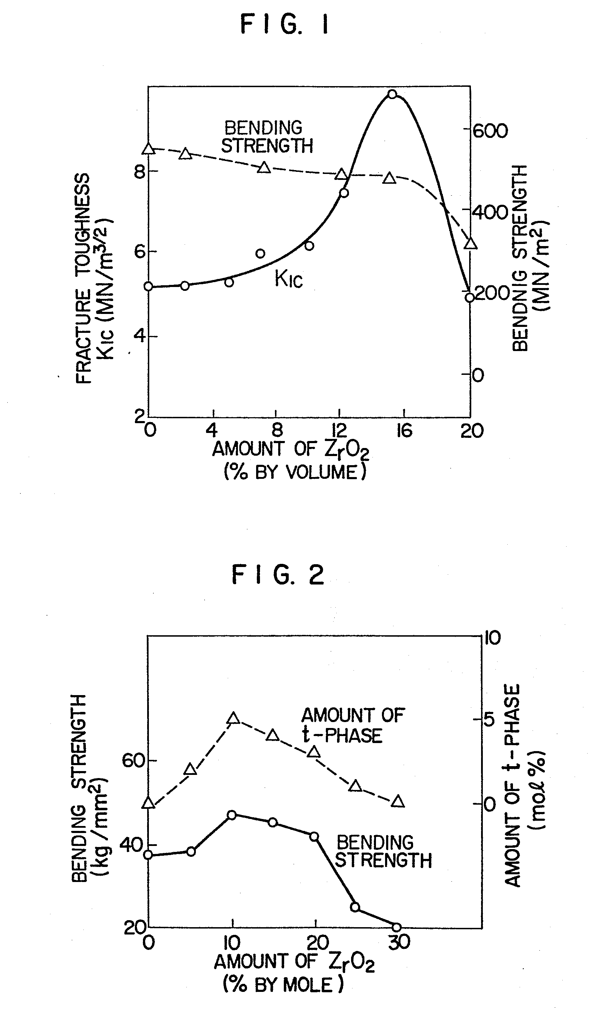

According to the above procedure, the microcracks stay dispersed finely in the body of the product, and they act to scatter the breaking stress in the product to improve its toughness. Therefore, the amount of $ZrO_2$ to be added and contained for optimizing the amount and distribution of microcracks is definitely specified to be about 16% by volume as shown in Fig. 1, and it is also specified that the crystal structure of $ZrO_2$ should principally be m-phase.

There have been also proposed the materials formed with the microcracks by addition of $ZrO_2$ to said crystal structure and further addition of MgO, NiO, $Y_2O_3$, $Cr_2O_3$ or the like well known as an adjuvant for sintering $Al_2O_3$ (see Japanese Patent Publication No. 33187/83). However, in these methods there is found such a defect that the materials obtained from these methods, though improved in "fracture toughness" which is a measure of toughness of sintered materials, are reduced in bending strength as is seen from Fig. 1.

According to another conventional art for improving the toughness, the crystal particles of $ZrO_2$ dispersed in $Al_2O_3$ are controlled to a small-size range to allow stabilized existence of t-phase, and a stress-inducing transformation of crystal structure from t-phase to m-phase is caused in use of the material to thereby increase its toughness.

This technique includes a method using MgO as an adjuvant for sintering $Al_2O_3$ (see Japanese Patent Kokai (Laid-Open) No. 61215/79) and a method using as the adjuvant at least one compound selected from MgO, $Y_2O_3$, $Cr_2O_3$ and NiO (see Japanese Patent Kokai (Laid-Open) No. 100976/82).

The patent specifications concerning these methods teach that for allowing the existence of $ZrO_2$ in the crystal form of stabilized t-phase in $Al_2O_3$, the particle size of $ZrO_2$ must be within the range of 0.05 to 2 μm in the former method and less than 1 μm in the latter.

The present inventors have made a further and closer study on the relation between crystal form and particle size of $ZrO_2$ staying dispersed in $Al_2O_3$ with reference to the techniques disclosed in said patent specifications and, as a result, they have reconfirmed that the particle size of $ZrO_2$ must be 0.3 - 0.4 μm or less for allowing the stabilized existence of $ZrO_2$ as t-phase. It has been thus decided that the above-mentioned conventional art for improving the toughness by controlling said particle size to allow existence of $ZrO_2$ as t-phase

involves great difficulties in its industrial application and is also not always suited for mass production. So, the realization of a more advantageous technique has been desired.

## SUMMARY OF THE INVENTION

The object of this invention is to provide an industrially useful sintered aluminous material having high hardness and toughness and free of the above-mentioned problems of the prior art.

According to the present invention, $Y_2O_3$ is added to an $Al_2O_3$-$ZrO_2$ material where $Al_2O_3$ is the major component, and the mixed material is sintered under the strictly controlled sintering conditions so that the crystal form of $ZrO_2$ dispersed in $Al_2O_3$ will become predominantly t-phase, and the desired high hardness and high toughness are provided by the stress-inducing transformation of crystal structure from t-phase to m-phase.

## BRIEF DESCRIPTION OF THE DRAWINGS

Fig. 1 is a graph showing the relation between the amount of $ZrO_2$ (volume percent) and the fracture toughness and bending strength for a known material.

Fig. 2 is a graph showing the results of experiments on the relation between the amount of $ZrO_2$ added and the bending strength and amount of t-phase in the crystal structure.

Fig. 3 is a metallographic transmission electron microscopical observation which shows the phase forms of $ZrO_2$ in an $Al_2O_3$ - 20 mol% $ZrO_2$ material. Fig. 3(1) shows $ZrO_2$ transformed to m-phase, and Fig. 3(2) shows $ZrO_2$ non-transformed and retained as t-phase.

Fig. 4 is a graph showing the relation between the amount of $ZrO_2$ added and the bending strength and ratio of transformation to m-phase.

Fig. 5 is a graph showing the relation between the amount of $ZrO_2$ and the bending strength and Vickers hardness in a material where $ZrO_2$ has been stabilized by the addition of $Y_2O_3$.

Fig. 6 is a graph showing the relation between the MgO content and the relative density for an $Al_2O_3$ - 15 mol% $ZrO_2$ - 0.23 mol% $Y_2O_3$ material.

Fig. 7 is a graph showing the relation between the amount of $ZrO_2$ stabilized by $Y_2O_3$ addition and the fracture toughness and bending strength for the material according to this invention.

DETAILED DESCRIPTION OF PREFERRED EMBODIMENTS

The present inventors have made a close study and experiments on various types of oxides which are known by way of phase diagrams in the art of sintered aluminous materials and, as a result, they have found that addition of $Y_2O_3$ to sintering materials is most effective for stabilizing $ZrO_2$ and that the strict control of the amount of $Y_2O_3$ added makes it possible to let t-phase be retained stably in the materials, regardless of the particle size

of $ZrO_2$ and other matters, and to improve bending strength as well as fracture toughness of the sintered materials. This invention was completed on the basis of such finding.

In this invention, the content of $ZrO_2$ in the sintering materials is specified to be less than 60% by mole, because the greater the amount of $ZrO_2$ dispersed, the less becomes the hardness of the material. The $ZrO_2$ content should be less than 30% by mole where an especially high hardness is required.

In this invention, in order that $ZrO_2$ dispersed may have principally the t-phase crystal form, it is suggested to add $Y_2O_3$ in an amount of 0.5 to 4.5% by mole based on the $ZrO_2$ content. For obtaining an ever better effect, it is recommended to add $Y_2O_3$ in an amount of 1.0 to 3.0% by mole based on the $ZrO_2$ content. The best effect of this invention is obtained when the $Y_2O_3$ content in the range of 1.5 to 2.5% by mole.

The reasons for the above definition on the respective components in this invention will be explained more particularly below based on the substantial data.

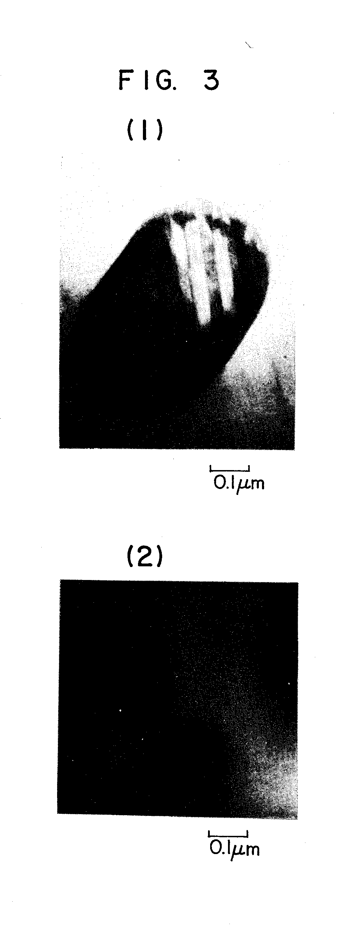

Fig. 2 shows the results of the study and experiments on the relation between the amount of $ZrO_2$ in an $Al_2O_3$-$ZrO_2$ material and the bending strength. The results reveal that the amount of $ZrO_2$ existing as t-phase and the bending strength well correspond to each other. Fig. 3 shows an example of transmission electron microscopical observation of the crystal form of $ZrO_2$ in

the $Al_2O_3$ - 20 mol% $ZrO_2$ material shown in Fig. 2. This micrograph clearly shows that the crystal form of $ZrO_2$ dispersed in $Al_2O_3$ is transformed into m-phase when the particle size thereof is outside the range of 0.3 - 0.4 μm.

From these results, it has been found that for allowing $ZrO_2$ in $Al_2O_3$ to be retained stably as t-phase, it needs to regulate the particle size of $ZrO_2$ after sintering within the range of as small as 0.3 - 0.4 μm, but it is difficult with the conventional industrial techniques to regulate the particle size of $ZrO_2$ to such small values.

So, in order to determine the possibility of stabilization of $ZrO_2$ in $Al_2O_3$ by the addition of a third component, the present inventors have made extensive studies on the additives such as MgO, CaO, $Y_2O_3$ and $TiO_2$ which are known to have a stabilizing effect in terms of phase diagram and, as a result, it has been found that these compounds do not act in the same manner and that $Y_2O_3$ is the most effective as described below.

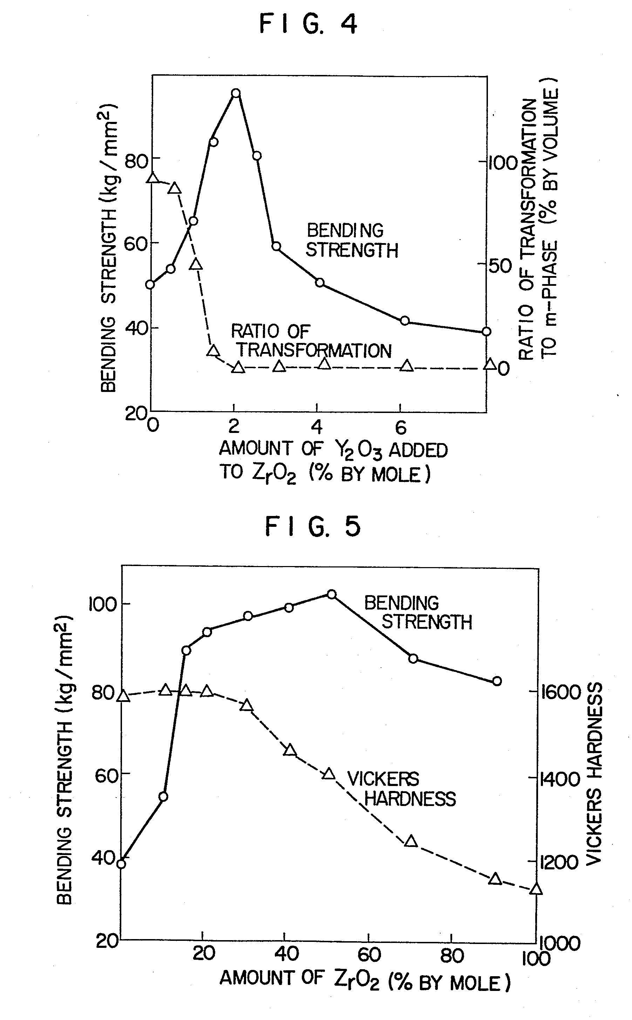

Fig. 4 depicts the results of actual measurements of bending strength as provided when the amount of $Y_2O_3$ contained in an $Al_2O_3$ - 25 mol% $ZrO_2$ material was changed. It is apparent from these results that when the amount of $Y_2O_3$ added exceeds 0.5% by mole based on the molar quantity of $ZrO_2$, the t-phase is stabilized, and when the amount of $Y_2O_3$ is 1.0% by mole, the t-phase holds a major portion of the crystal structure of $ZrO_2$. When the $Y_2O_3$ content is 1.5% by mole (based on $ZrO_2$), about

99% of $ZrO_2$ exists as t-phase.

It is noted that bending strength is maximized when the amount of $Y_2O_3$ added (based on $ZrO_2$) is within the range from 1.5% by mole, at which the t-phase stabilization is substantially attained, to 2.5% by mole.

Fig. 5 is a graph showing the results of the experiments for deciding the optimum amount of $ZrO_2$ to be stabilized by adding $Y_2O_3$ to $Al_2O_3$. In these experiments, the amount of $Y_2O3$ added based on $ZrO_2$ was specified to be 2% by mole. It is seen that the bending strength rises sharply when the amount of $ZrO_2$ exceeds 15% by mole. The bending strength drops when the amount of $ZrO_2$ becomes greater than 50% by mole. This is considered attributable to the fact that the thermal stress which influences the stability of $ZrO_2$ is decreased because of the increased amount of $ZrO_2$, bringing the properties of the material close to those of PSZ (partially stabilized zirconia). The material, however, is practically usable if the $ZrO_2$ content is not greater than 60% by mole.

However, since the primary object of this invention is to improve the low material strength without imparing the innate hardness of $Al_2O_3$, it is desirable in view of the above-shown experimental results that the amount of $ZrO_2$ to be added is not greater than 30% by mole at which the drop of hardness is small.

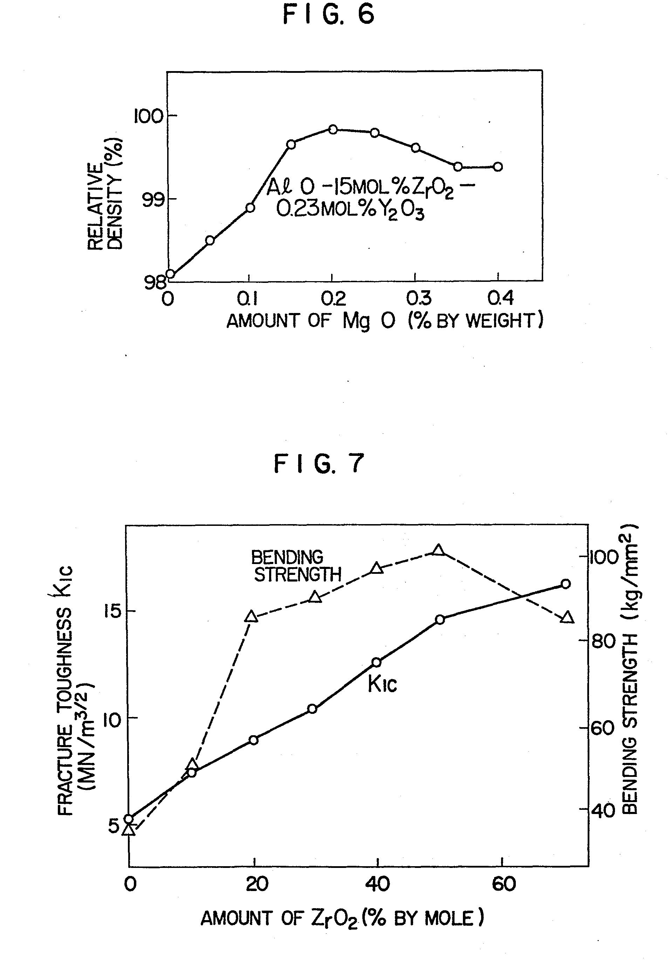

In this invention, it is also desirable to add MgO which is known since long as adjuvant for sintering $Al_2O_3$. The reason is that MgO has the effect of improving the sintered density even in the $Y_2O_3$-added $Al_2O_3$-$ZrO_2$ composite ceramics of this invention as shown in Fig. 6. The optimum amount of MgO to be added is from 0.15 to 0.30% by weight. In this invention, however, the addition of MgO in said amount range does not contribute to the stabilization of $ZrO_2$.

In this invention, in order that $Y_2O_3$ may be well incorporated as a solid solution in $ZrO_2$ in the sintering process, it is desirable to control the sintering temperature strictly within the range of 1,500 - 1,700°C. If the sintering temperature is below said range, the reaction between $ZrO_2$ and $Y_2O_3$ may not be effected in a satisfactory way, while if the sintering temperature is above said range, there may take place a reaction between $Al_2O_3$ and $Y_2O_3$ to decrease the amount of $Y_2O_3$ dissolved in $ZrO_2$, resulting in a reduction of the rate of t-phase in the crystal structure.

In this invention, use of conventionally known HIP is also an effective means for increasing the density of the sintered material, and such technique may be incorporated in the process of this invention.

This invention will be further described below with reference to the examples thereof.

Example 1

A specimen of sintering material composed predominantly of $Al_2O_3$ and $ZrO_2$ and containing $Y_2O_3$ added thereto in an amount of 2% by mole based on $ZrO_2$ was

prepared, and the change of fracture toughness and bending strength of the specimen with change of the amount of $ZrO_2$ was examined, the results being shown in Fig. 7. The sintering was conducted at 1,600°C under normal pressure in the atmospheric air for a period of 30 minutes. It is apparent from comparing Fig. 1 and Fig. 7 that the present sintered material is phenomenally improved not only in fracture toughness but also in bending strength.

Example 2

The content of $ZrO_2$ was specified to be 20% by mole for strictly controlling the crystal structure of $ZrO_2$ dispersed in the composition while the amount of $Y_2O_3$ added based on $ZrO_2$ was changed, and the changes in the ratio of transformation from t-phase to m-phase and in bending strength were examined. The results are shown in Fig. 4. The sintering conditions were 1,550°C and 2 hours in vacuo. The ratio of transformation from t-phase to m-phase was determined by an X-ray method.

As is seen from Fig. 4, the maximum bending strength of 90 kg/mm$^2$ was obtained when the amount of $Y_2O_3$ added was about 2% by mole based on $ZrO_2$. It was also found that when the amount of $Y_2O_3$ is less than 0.5% by mole, the majority of the crystal structure is composed of m-phase and the material strength is reduced by the microcracks, while when the amount of $Y_2O_3$ exceeds 4.5% by mole, c-phase becomes predominant, decreasing the amount of t-phase which contributes to the improvement of toughness. It can be learned from this figure that when the amount of $Y_2O_3$ is within the range of 1 - 3% by mole based on $ZrO_2$, a bending strength of 65 kg/mm² can be maintained, a marked improvement of strength over the $Al_2O_3$ material which showed a bending strength of 30 - 40 kg/mm².

Example 3

A comparative test was made on the properties of the sintered material according to this invention and the properties of the known ceramic materials used for a cutting tool which is a typical example of use where a high hardness and high toughness of the material are required. The results are shown in Table 1.

The material of this invention was composed of $Al_2O_3$, $ZrO_2$ and $Y_2O_3$, and the amount of $Y_2O_3$ was 2% by mole based on $ZrO_2$. There were prepared two types of compositions differing in the amount of $ZrO_2$ based on $Al_2O_3$, said $ZrO_2$ amount being 20% by mole in one composition (material A of this invention) and 50% by mole in the other (material B of this invention). Each composition was sintered at 1,600°C under normal pressure in the atmospheric air for one hour to produce a sintered material. The tools made of the comparative ceramic materials included the commercially sold ones and the experimental products produced in the same way as in the case of the material of this invention. The bending strength of each product was measured by cutting out a 4 x 3 x 7 mm test piece from the throwaway tool.

The differences between the properties of the material of this invention and the properties of the conventional materials relating to the microcrack toughening mechanism are evident from Table 1.

Table 1

| Type | | Hardness | Bending strength (kg/mm$^2$) |
|---|---|---|---|
| $Al_2O_3$ | A company | 1700 | 45 |
| | B company | 1670 | 48 |
| | C company | 1780 | 38 |
| $Al_2O_3$ - TiC | B company | 1950 | 56 |
| | C company | 1900 | 58 |
| $Al_2O_3$ - $ZrO_2$ | C company | 1700 | 48 |
| | C company | 1550 | 37 |
| $Al_2O_3$ - 20 mol% $ZrO_2$ (Experimental product by our company) | | 1450 | 45 |
| $ZrO_2$ - 3 mol% $Y_2O_3$ (Experimental product by our company) | | 1150 | 100 |
| Product of this invention | | 1600 | 95 |
| Product of this invention | | 1450 | 105 |

As understood from the foregoing descriptions, this invention has the following advantages over the conventional products:

(1)      The strength of the sintered aluminous material is about two times greater over the conventional materials.

(2)    Since $Al_2O_3$ is used as base, the production cost can be about one figure reduced from the cost required in the case of using other ceramic materials (such as $Si_3N_4$, SiC, $ZrO_2$-$Y_2O_3$, etc.), and the produced sintered material can be readily used industrially for large-size structural members.

(3)    Since the material can be produced by normal-pressure sintering, the production is easy and no special apparatus such as hydraulic press is required. Also, the large-sized special shapes can be produced easily as compared with the conventional production system using a hot press or like apparatus.

-14-

## CLAIMS

1.      A sintered aluminous material having high hardness and toughness, comprising $Al_2O_3$ as principal component and containing $ZrO_2$ in an amount of not more than 60% by mole and $Y_2O_3$ in amount of 0.5 to 4.5% by mole based on $ZrO_2$, and having the crystal structure predominantly of t-phase $ZrO_2$.

2.      The sintered aluminous material according to Claim 1, wherein the content of $Al_2O_3$ is not less than 70% by mole, and not more than 70% of the crystal structure of $ZrO_2$ is in t-phase.

3.      The sintered aluminous material according to Claim 1, wherein the content of $ZrO_2$ is 15 to 30% by mole and the amount of $Y_2O_3$ is 1.5 - 2.5% by mole based on $ZrO_2$ and not less than 90% of the crystal structure of $ZrO_2$ is in t-phase.

4.      The sintered aluminous material according to any one of the preceeding claims containing 0.15 to 0.30% by weight of MgO as a sintering adjuvant.

5.      A process for the production of a sintered aluminous material as defined in any one of Claims 1-4 comprising adding $Y_2O_3$ to a base material comprising $Al_2O_3$ and $ZrO_2$ and optionally MgO and sintering the resulting product at $1500^{\circ} - 1700^{\circ}C$.

0119028

1/4

F I G. I

FIG. 1

F I G. 2

FIG. 2

F I G. 3

(1)

$\overline{0.1\mu m}$

(2)

$\overline{0.1\mu m}$

F I G. 4

F I G. 5

## F I G. 6

Vertical axis: RELATIVE DENSITY (%), values 98, 99, 100
Horizontal axis: AMOUNT OF MgO (% BY WEIGHT), values 0, 0.1, 0.2, 0.3, 0.4

$A\ell O - 15 MOL\% ZrO_2 - 0.23 MOL\% Y_2O_3$

## F I G. 7

Left vertical axis: FRACTURE TOUGHNESS $K_{IC}$ (MN/m$^{3/2}$), values 5, 10, 15
Right vertical axis: BENDING STRENGTH (kg/mm$^2$), values 40, 60, 80, 100
Horizontal axis: AMOUNT OF $ZrO_2$ (% BY MOLE), values 0, 20, 40, 60

BENDING STRENGTH

$K_{IC}$